# EUROPEAN PATENT APPLICATION

(11) **EP 1 845 477 A2**
(43) Date of publication of application: **17.10.2007**
(21) Application number: 07250673.6
(22) Date of filing: 19.02.2007
(51) Int. Cl.: G06K 9/00

(54) **Moving image division apparatus, caption extraction apparatus, method and program**

(30) Priority: 30.03.2006 JP 2006095057
(71) Applicant: KABUSHIKI KAISHA TOSHIBA, Tokyo 105-8001 (JP)
(72) Inventor: Yamamoto, Koji, c/o K.K. Toshiba Intellectual Property Division, Minato-ku Tokyo 105-8001 (JP)
(74) Representative: Maury, Richard Philip

(57) **Abstract**

A moving image division apparatus includes (A) means (101) for store a 3-dimensional spatio-temporal image containing a plurality of video frames arranged in time order, (B) means (102) for extracting a plurality of line segments parallel to a time axis in a slice image, the slice image being acquired by cutting the spatio-temporal image along a plane parallel to the time axis and (C) means (103) for dividing the spatio-temporal image into a plurality of scenes based on a temporal domain of the line segment.

## Description

The present invention relates to a moving image division apparatus, method and program for dividing, into scenes, video data produced by superimposing characters and/or images, and a caption extraction apparatus, method and program for extracting captions contained in the video data.

In accordance with recent developments in information distribution, such as multi-channel in digital broadcasting, a great amount of video content is available. Also, on the recording device side, video content has come to be recorded and processed as digital data and be viewed efficiently in accordance with the spread of various recording devices, such as hard disk recorders and personal computers with tuners. As one of various processing functions, there is a function for dividing a certain amount of video content into preset coherent scenes, thereby enabling the leading portion of content to be detected or content to be skipped. The start point of each scene is also called a chapter point, and can be set to be automatically detected by a device, or can be manually set by a user.

There is a scene-dividing method for detecting captions and regarding, as one scene, a frame sequence in which a single caption appears. For instance, to detect a caption, an image of each frame is divided into blocks, and the blocks that satisfy a predetermined condition in, for example, brightness are extracted from two successive frames. If these blocks coincide horizontally or vertically, they are determined to be a caption area (see, for example, Japanese Patent No. 3024574).

To set, as one scene, the frame sequence in which a single caption appears, it is necessary to continuously detect the caption. However, in the above-mentioned technique, only the information acquired from two successive frames is used as continuous data in the time domain. Accordingly, a change in the brightness of the background may change the size of the detected caption area, or may cause failure to detect the caption, making it impossible to divide video content into scenes. In particular, an important caption for dividing video content into meaningful scenes may be often displayed for a long time at a corner of the screen. Such an important caption may be in unsaturated color, translucent or formed of small characters so as not to be conspicuous, and hence cannot be detected reliably.

As described above, the conventional technique cannot reliably detect an inconspicuous caption displayed for a long time. Therefore, if scene division is performed based on the frame sequences in which captions appear, an excessive number of scenes may be obtained, or division itself may be impossible.

In accordance with a first aspect of the invention, there is provided a moving image division apparatus comprising: a storage unit configured to store a 3-dimensional spatio-temporal image containing a plurality of video frames arranged in time order; an extraction unit configured to extract a plurality of line segments parallel to a time axis in a slice image, the slice image being acquired by cutting the spatio-temporal image along a plane parallel to the time axis; and a division unit configured to divide the spatio-temporal image into a plurality of scenes based on a temporal domains of the line segments.

In accordance with a second aspect of the invention, there is provided a caption extraction apparatus comprising: a storage unit which stores a 3-dimensional spatio-temporal image containing a plurality of video frames arranged in time order; an extraction unit configured to extract a plurality of line segments parallel to a time axis in a slice image, the slice image being acquired by cutting the spatio-temporal image along a plane parallel to the time axis; and a merging unit configured to merge the line segments into a single line segment serving as a caption area at the time that each space-time distance between the line segments is not more than a threshold value.

The invention can be more fully understood from the following detailed description when taken in conjunction with the accompanying drawings, in which:
FIG. 1 is a block diagram illustrating an image division apparatus according to a first embodiment;
FIG. 2 is a flowchart illustrating an operation example of the image division apparatus of FIG. 1;
FIG. 3 is a view illustrating the relationship between a spatio-temporal image and a slice image;
FIG. 4A is a view useful in explaining the process performed by the scene division unit appearing in FIG. 1;
FIG. 4B is a view illustrating a scene division example corresponding to FIG. 4A;
FIG. 5 is an expanded view illustrating a portion around one of the line segments appearing in FIG. 3;
FIG. 6 is a flowchart illustrating a line-segment detection method employed at step S203 in FIG. 2;
FIG. 7A is a view illustrating the distance between a target pixel and another pixel;
FIG. 7B is a view illustrating the average of the distances between a target pixel and respective N pixels;
FIG. 8A is a view illustrating the distance between a target pixel and another pixel adjacent to the target pixel in the direction perpendicular to the time axis;
FIG. 8B is a view illustrating the average of the distances of N pixels, and respective pixels adjacent to the N pixels;
FIG. 9A is a view illustrating the difference between two distances, one distance being between a target pixel and another pixel, the other distance being between another pixel, and yet another pixel;
FIG. 9B is a view illustrating the average of the difference between the above-mentioned two distances related to the target pixel;
FIG. 10 is a block diagram illustrating the scene division unit appearing in FIG. 1;
FIG. 11 is a flowchart illustrating an operation example of the scene division unit of FIG. 10;
FIG. 12A is a block diagram illustrating a block used instead of the line-segment detection unit of FIG. 1;
FIG. 12B is a block diagram illustrating a block used instead of the scene determination unit of FIG. 1;
FIG. 13 is a view useful in explaining the process performed when a low-reliability domain exists;
FIG. 14 is a view useful in explaining a method for temporally sampling compressed, coded moving image data at high speed;
FIG. 15 is a view useful in explaining another method for sampling the same with time;
FIG. 16 is a view useful in explaining a method for spatially sampling compressed, coded moving image data at high speed;
FIG. 17 is a view useful in explaining another method for spatially sampling the same;
FIG. 18 is a block diagram illustrating the scene division unit of FIG. 1;
FIG. 19A is a view useful in explaining the process of detecting a hierarchical tree structure, performed by the scene division unit of FIG. 1;
FIG. 19B is a view illustrating a scene division example corresponding to FIG. 19A;
FIG. 20 is a flowchart illustrating an operation example of the scene structure detection domain appearing in FIG. 18;
FIG. 21A is a view useful in explaining a grouping process performed by the scene division unit of FIG. 1;
FIG. 21B is a view illustrating a scene division example corresponding to FIG. 21A;
FIG. 22A is a view useful in explaining the process of grouping video data into main content and the other content, performed by the scene division unit of FIG. 1;
FIG. 22B is a view illustrating a scene division example corresponding to FIG. 22A;
FIG. 23 is a flowchart including the operation of the scene structure detection domain appearing in FIG. 18;
FIG. 24 is a view useful in explaining a modification of the hierarchical structure by the scene structure detection domain appearing in FIG. 18;
FIG. 25 is a view useful in explaining the process of dividing, into scenes, a moving image containing a CM domain, performed by the scene structure detection domain appearing in FIG. 18;
FIG. 26 is a block diagram illustrating a caption extraction apparatus according to a second embodiment;
FIG. 27 is a flowchart illustrating an operation example of the caption extraction apparatus of FIG. 26; and
FIG. 28 is a view useful in explaining step S2702 in FIG. 27.

A moving image division apparatus, method and program, and a caption extraction apparatus, method and program according to embodiments of the invention will be described in detail with reference to the accompanying drawings.

The moving image division apparatus, method and program according to an embodiment are used to temporally accumulate, as a spatio-temporal image, video data frames produced by superimposing characters and/or images, to extract line segments parallel to the time axis from slice images obtained by cutting the spatio-temporal image along planes parallel to the time axis, to divide the video data into scenes based on an area produced by collecting the extracted line segments. Further, the caption extraction apparatus, method and program according to another embodiment are used to extract captions from the video data. As mentioned above, the caption indicates a character or image displayed on a screen. Logos, for example, which contain no characters, are also referred to as captions. Further, the scene indicates a moving image including a plurality of video frames and designated by the start time and end time.

The moving image division apparatus, method and program, and the caption extraction apparatus, method and program can accurately divide video data into meaningful scenes.

In the embodiments, the domain in which a caption appears is detected as a line segment in a spatio-temporal image, thereby enabling video data to be divided into meaningful scenes. Further, merging of line segments enables the areas of captions to be extracted. In the embodiments, the domains in which captions appear can be reliably detected even if the color of the background varies, or the captions are translucent or small, whereby highly accurate scene division and caption area extraction can be realized.

### (First Embodiment)

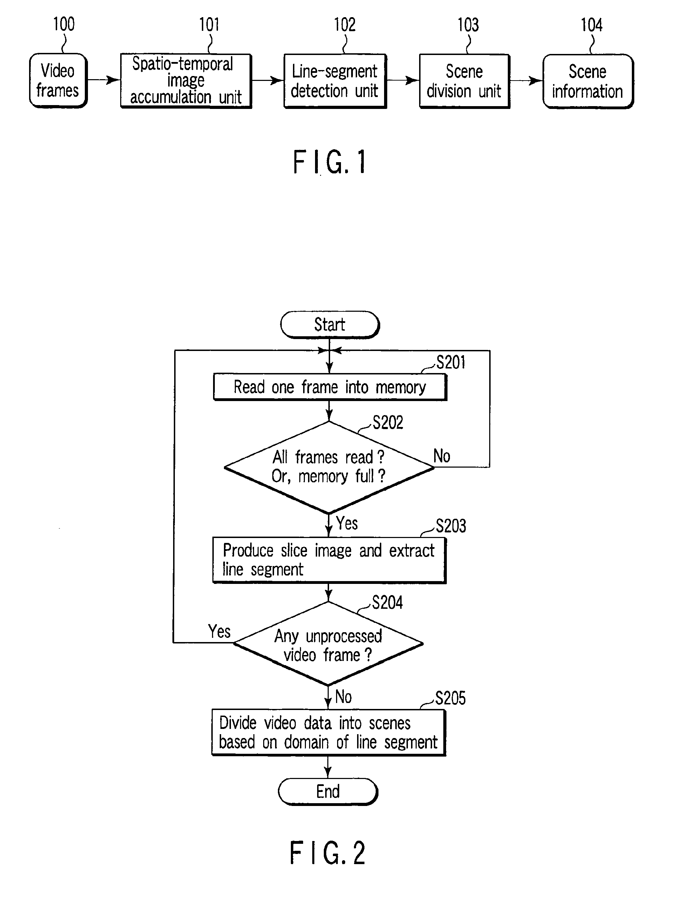

Referring first to FIG. 1, a moving image division apparatus according to a first embodiment will be described.

The moving image division apparatus of the first embodiment comprises a spatio-temporal image accumulation unit 101, line-segment detection unit 102 and scene division unit 103.

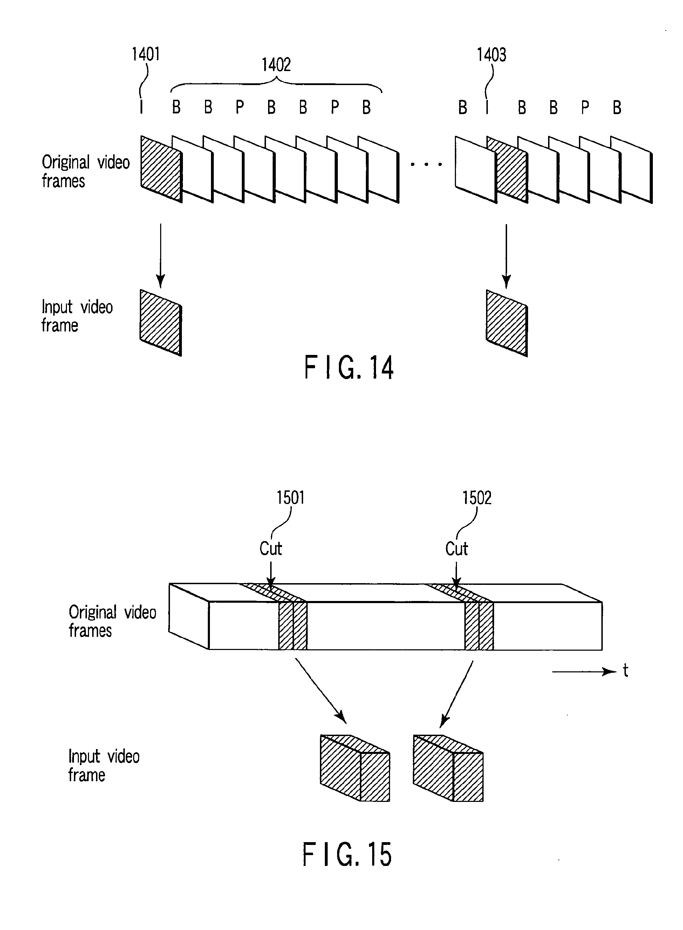

The spatio-temporal image accumulation unit 101 receives a plurality of video frames 100 contained in a moving image, and accumulates them as a single spatio-temporal image. The spatio-temporal image accumulation unit 101 includes a memory, and accumulates the video frames and spatio-temporal image. Particulars concerning the spatio-temporal image accumulation unit 101 will be described later with reference to FIGS. 14 to 17.

The line-segment detection unit 102 detects line segments in at least one of the spatio-temporal images accumulated in the spatio-temporal image accumulation unit 101. Particulars concerning the line-segment detection unit 102 will be described later with reference to FIGS. 2, 3, 5 to 9B, 12A and 12B.

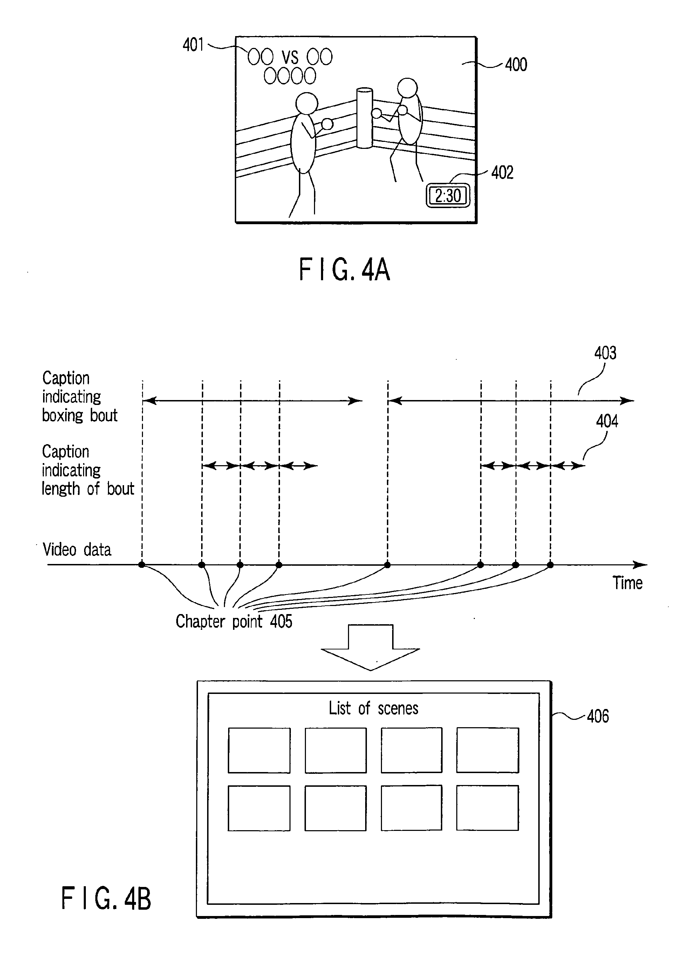

The scene division unit 103 divides a moving image (video data) into scenes based on the line segments detected by the line-segment detection unit 102, and adds the scenes to scene information 104. Particulars concerning the scene division unit 103 will be described later with reference to FIGS. 4A, 4B, 10, 11, 18, 19A, 19B, 20, 21A, 21B, 22 and 23.

Referring then to FIG. 2, the operation of the moving image division apparatus of FIG. 1 will be described. In the following description, elements similar to the above-mentioned ones are denoted by corresponding reference numbers, and no description is given thereof.

Firstly, the spatio-temporal image accumulation unit 101 fetches a video frame and accumulates it into the memory (step S201). At this time, if any video frame is already accumulated, the spatio-temporal image accumulation unit 101 arranges the video frames including the present one in order of acquisition time. The process of step S201 is iterated until all video frames are fetched, or the memory becomes full (step S202). If the memory becomes full, the spatio-temporal image accumulation unit 101 outputs part of the spatio-temporal image data to the line-segment detection unit 102, whereby the line-segment detection unit 102 superimposes the acquired spatio-temporal image data into a single spatio-temporal image.

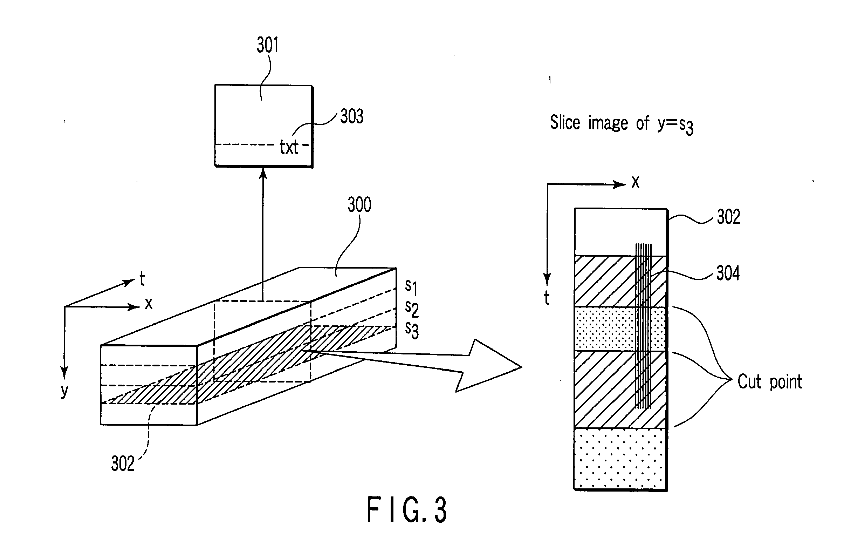

Subsequently, the line-segment detection unit 102 generates a plurality of slice images from the single spatio-temporal image, and detects a plurality of line segments in the image (step S203). The slice images will be described later with reference to FIG. 3. The line-segment detection unit 102 detects domain information (also called line segment information) that includes domain time information indicating the start time and end time of the line segment of each scene, and domain position information indicating the start position and end position of the line segment of each scene. If the memory is detected to be full at step S202, and hence an unprocessed video frame remains, the program returns to step S201, where the above process is iterated until all video frames are processed (step S204).

Subsequently, the scene division unit 103 divides the video data into scenes based on the domain information for the line segments detected by the line-segment detection unit 102 (step S205). For instance, the scene division unit 103 sets, as the domain time information, a chapter point that indicates the start time of each scene. Instead of the start time itself, a time near the start time may be set as the chapter point. For instance, a time earlier than the start time by a preset period may be set as the chapter point. Alternatively, the closest cut point (the point at which the video data is temporarily cut for, for example, editing) may be set as the chapter point.

Referring to FIG. 3, a description will be given of the relationship between a spatio-temporal image and a slice image.

In FIG. 3, reference number 300 denotes a spatio-temporal image, which is a set of video frames arranged in order of acquisition time, using direction t as the time axis. Reference number 301 denotes a single video frame extracted from the spatio-temporal image 300.

The line-segment detection unit 102 cuts the spatio-temporal image 300, using at least one plane parallel to the time axis. This plane may be a horizontal plane (y is constant), a vertical plane (x is constant), an oblique plane, or a curved surface. The line-segment detection unit 102 may firstly cut the spatio-temporal image using a curved surface, to sound for the position at which a caption may well exist, and then may cut the sounded position of the image. Further, since in general, captions often exist near ends of the spatio-temporal image, it is desirable to cut the image using planes that cut the ends.

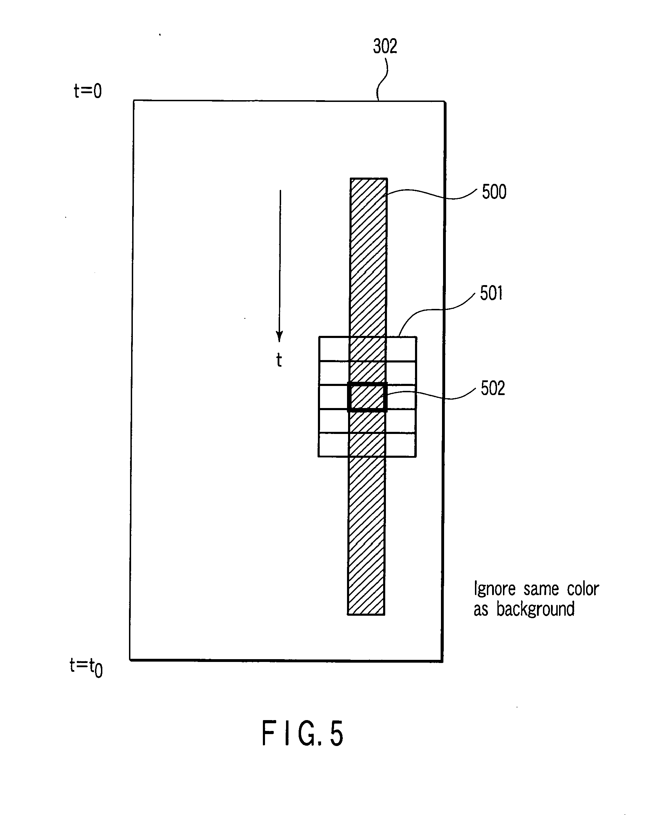

When planes are used for cutting, slice images are produced. If the spatio-temporal image is cut using a horizontal plane, with the value of y shifted one by one, the same number of slice images as the height of the image can be produced. In FIG. 3, three slice images are produced by cutting the spatio-temporal image with three planes of y = s1, s2 and s3. Reference number 302 denotes a slice image of y = s3. On the slice image acquired by cutting a plane, which includes a caption denoted by reference number 303, the edge portion between the caption and background appears as a set of line segments as denoted by reference number 304. The line-segment detection unit 102 detects the line segments. The method of detecting the line segments will be described later with reference to FIGS. 5 to 9B.

Referring to FIGS. 4A and 4B, a description will be given of a scene division example of a TV program executed by the scene division unit 103 shown in FIG. 1.

A video frame 400 includes captions 401 and 402. FIG. 4A shows a boxing bout where the caption 401 indicates matching, and the caption 402 indicates the time of each round of the bout. Assume here that the caption 401 corresponds to a display domain 403 in FIG. 4B in which the horizontal axis is used as the time axis, and the caption 402 corresponds to a display domain 404 in FIG. 4B. If chapter points 405 are set at the start times in the display domain 404 to divide the video data into scenes, such a list of scenes as denoted by reference number 406 can be displayed. The setting of the chapter points 405 corresponds to the scene division. Since each chapter point is set at a time point at which the pairing of fighters is switched or the start of each round of the fight is displayed, meaningful scenes can be produced by division, which differs from cut points that indicate simple switching of images.

Referring then to FIGS. 5, 6, 7A, 7B, 8A, 8B, 9A and 9B, a description will be given of a method of detecting a line segment, employed at step S203 of FIG. 2. This method is only one of various line-segment detection methods.

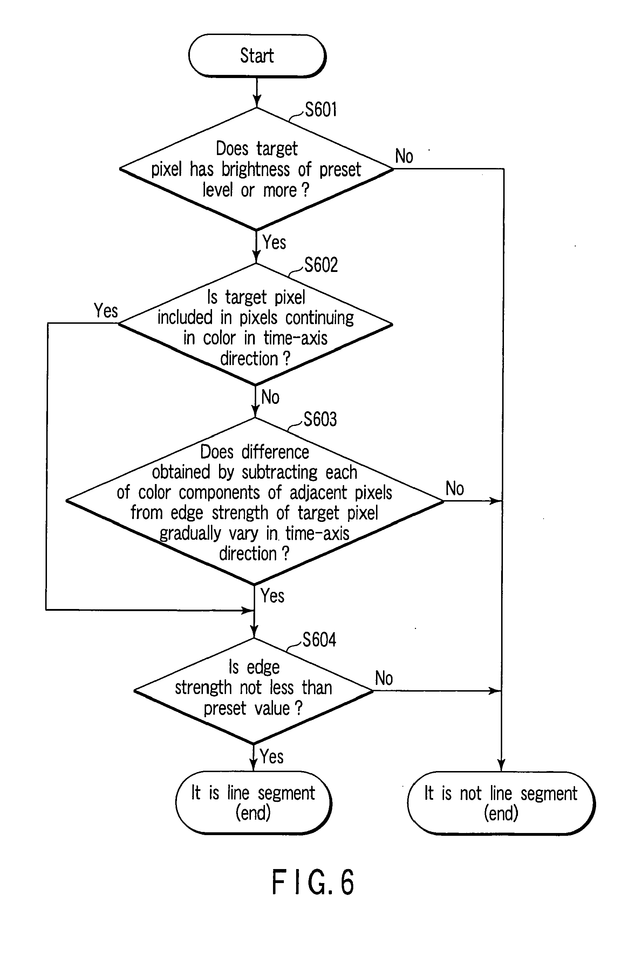

A line segment 500 in FIG. 5 is obtained by expanding a portion around one of the line segments of a line segment set 304 included in the slice image 302 in FIG. 3. Reference number 501 indicates an arrangement of pixels around a target pixel 502 (encircled by the thick line). A method for determining whether the target pixel 502 is part of the line segment will be described referring to FIGS. 6, 7A, 7B, 8A, 8B, 9A and 9B.

Firstly, the line-segment detection unit 102 determines whether the target pixel has a brightness of a certain level or more (step S601). This is performed because many captions have brightness levels higher than the background. If the brightness is not less than a preset level, the program proceeds to step S602, whereas if it is less than the preset level, it is determined that the target pixel is not included in the line segment, thereby finishing the process.

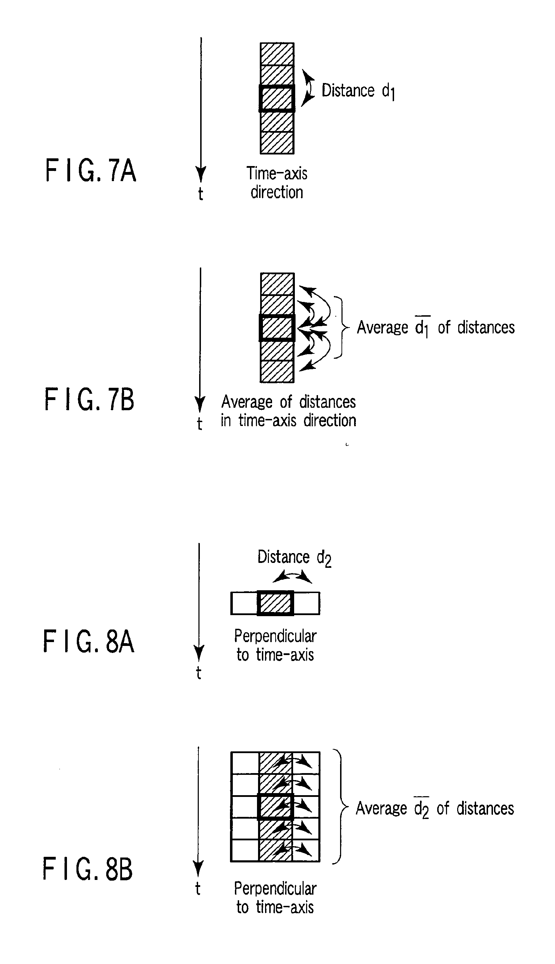

Subsequently, it is determined whether the target pixel is included in the pixels continuing in color in the direction of the time axis (step S602). If the distance d₁ between the target pixel and another pixel appearing in the time-axis direction, shown in FIG. 7A, is smaller than a threshold value, it is determined that the target pixel is part of the color component continuing in the time-axis direction. FIG. 7A is a view illustrating the distance between a target pixel and another pixel appearing in the direction of the axis of time. Specifically, the distance between certain feature amounts, such as certain color or brightness levels, is used as the distance d₁. As the color distance, the Euclidean distance concerning RGB or HSV values is used. H indicates the hue, S indicates the color saturation, and V indicates the brightness. There is another method for the determination. Namely, as shown in FIG. 7B, the average < d₁ > = Σ d₁/N of the distances between the target pixel and respective N pixels (N is a preset value) appearing successively before and after the target pixel in the time-axis direction is computed. If < d₁ > is smaller than a threshold value, it is determined that the target pixel is included in the pixels continuing in color in the time-axis direction. The following process is the same as the above. If the target pixel is included in the pixels continuing in color in the time-axis direction, the program proceeds to step S604, whereas if it is not included in the pixels, it is determined that the target pixel is not included in the line segment, thereby finishing the process.

After that, it is determined whether the edge strength of the target pixel is not less than a preset value (step S604). If the distance d₂ between the target pixel and a pixel adjacent thereto in the direction perpendicular to the time-axis direction, shown in FIG. 8A, is greater than a threshold value, it is determined that the edge strength of the target pixel is not less than the preset value. FIG. 8A is a view illustrating the distance between a target pixel and another pixel adjacent to the target pixel in the direction perpendicular to the time axis. Specifically, the distance between certain feature amounts, such as certain color or brightness levels, is used as the distance d₂. As the color distance, the Euclidean distance concerning RGB or HSV values is used. There is another method for the determination. Namely, as shown in FIG. 8B, the average < d₂ > = Σ d₂/N of the distance between the target pixel and a pixel adjacent thereto in the direction perpendicular to the time-axis direction, and the distances of N pixels appearing successively before and after the target pixel in the time-axis direction, and respective pixels adjacent to the N pixels in the direction perpendicular to the time-axis direction is computed. If < d₂ > is greater than the threshold value, it is determined that the edge strength of the target pixel is not less than the preset value. If the edge strength of the target pixel is not less than the preset value, it is determined that the target pixel is included in the line segment, thereby finishing the process. In contrast, if the strength is less than the preset value, it is determined that the target pixel is not included in the line segment, thereby finishing the process.

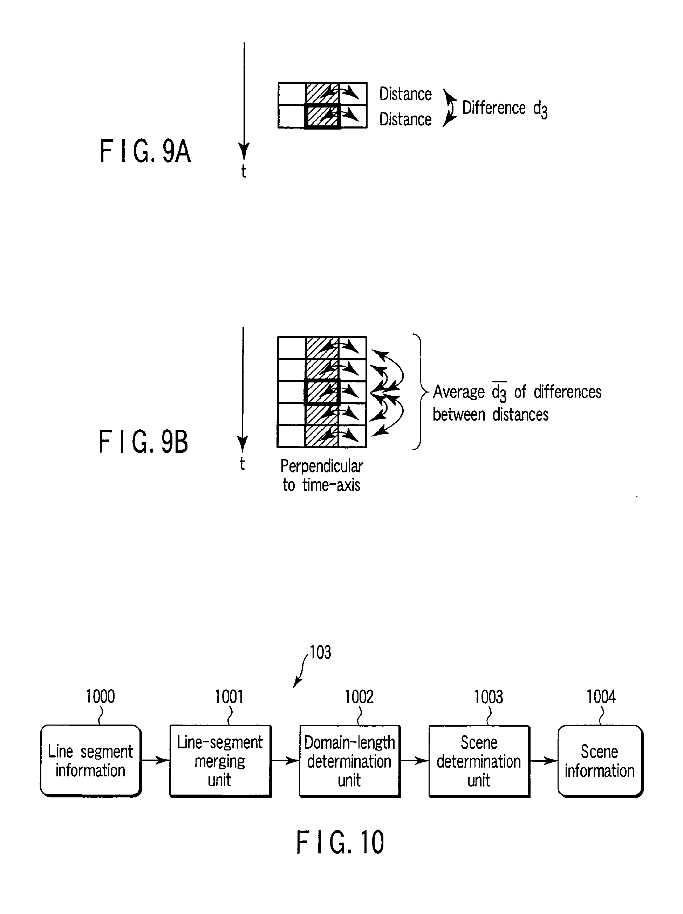

Thereafter, to enable a translucent line segment to be detected, it is determined whether the difference obtained by subtracting, from the edge strength of the target pixel, each of the color components of the adjacent pixels gradually varies in the time-axis direction (step S603). If it is determined that the difference gradually varies in the time-axis direction, the program proceeds to step S604, whereas if the difference does not gradually vary in the time-axis direction, it is determined that the target pixel is not included in the line segment, thereby finishing the process. Alternatively, as in the case of FIG. 8A, the difference, in units of color components, between the target pixel and another pixel spatially adjacent thereto is acquired. Subsequently, as shown in FIG. 9A, the difference d₃ between two distances is acquired, one of the two distances being between the target pixel and the pixel spatially adjacent thereto, and the other distance being between another pixel appearing in the time-axis direction immediately before or after the target pixel, and yet another pixel spatially adjacent to said another pixel. If d₃ is smaller than a threshold value, it is determined that the difference obtained by subtracting, from the edge strength of the target pixel, each of the color components of the adjacent pixels gradually varies in the time-axis direction. Alternatively, as shown in FIG. 9B, the average < d₃ > = ∑ d₃ /N of the difference between the above-mentioned two distances related to the target pixel, and the difference between the distances acquired in the same way as the above concerning N pixels appearing successively before and after the target pixel in the time-axis direction, is computed. If < d₃ > is smaller than the threshold value, it is determined that the difference obtained by subtracting, from the edge strength of the target pixel, each of the color components of the adjacent pixels gradually varies in the time-axis direction.

The flowchart of FIG. 6 is just an example. Not all steps S601 to S604 are indispensable. Part of the steps may be deleted, the order of the steps may be changed, or other steps may be employed. Other steps include, for example, the step of expanding each line segment and/or changing the threshold value for coupling or removing decoupled small areas.

The expansion of each line segment is performed after the process illustrated by the flowchart of FIG. 6. For instance, it is determined whether at least five pixels included in the nine pixels around a target pixel are included in a line segment. If the at least five pixels are included in the line segment, the target pixel is also determined to be included in the line segment, whereas if they are excluded from the line segment, the target pixel is also determined to be excluded therefrom. As a result, the line segment is expanded. The threshold process for a line segment means a process for coupling a target pixel to another line segment, or erasing the target pixel. For instance, if the target pixel is held between two line segments, the two line segments are combined into a new single line segment, and the target pixel is contained in the new line segment. Further, if the target pixel is away from a line segment by a preset distance or more, the line segment is erased.

Referring to FIG. 10, the scene division unit 103 shown in FIG. 1 will be described. FIG. 10 is a block diagram illustrating the configuration of the scene division unit 103 in detail.

As shown, the scene division unit 103 comprises a line-segment merging unit 1001, domain-length determination unit 1002 and scene determination unit 1003.

The line-segment merging unit 1001 receives line segment information 1000 acquired by the line-segment detection unit 102, and merges line segments. The domain-length determination unit 1002 determines the domain length of the line segments. The scene determination unit 1003 determines chapter points from the merged line segment, and outputs scene information 1004.

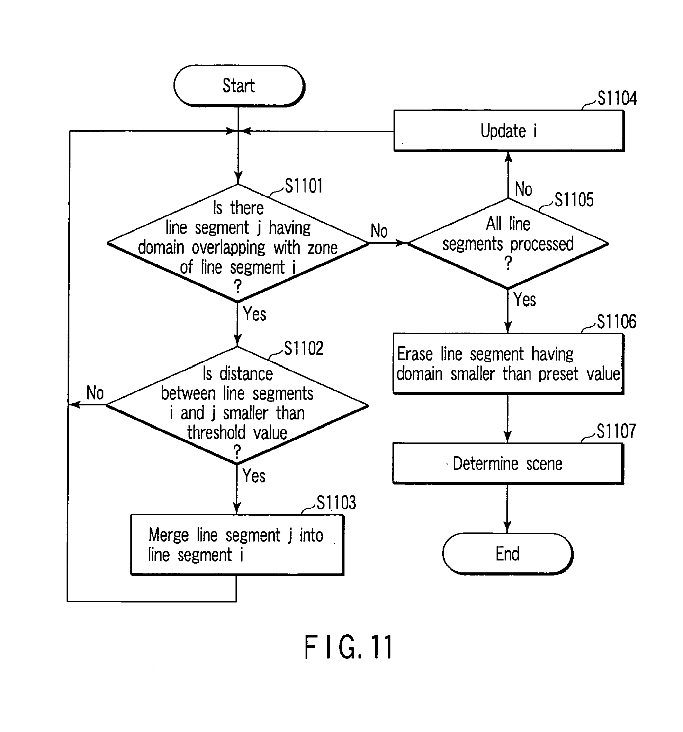

Referring to the flowchart of FIG. 11, the operation of the scene division unit 103 will be described in detail.

Firstly, the line-segment merging unit 1001 searches for the domain ranging from the start point of line segment i to the end point thereof in the time-axis direction, and searches for line segment j having a domain overlapping the domain of line segment i (step S1101). In this case, the total number of line segments is N, and i and j are 1, 2, ..., N. If line segment j having a domain overlapping the domain of line segment i exists, the merging unit 1001 proceeds to step S1102, whereas if there is no such line segment, the merging unit 1001 proceeds to step S1105.

The line-segment merging unit 1001 determines whether the distance between line segments i and j having overlapping domains is not more than a threshold value (step S1102). The distance between line segments i and j is a spatial distance therebetween in a spatio-temporal image. If these line segments exist adjacent to each other in the spatio-temporal image, the distance therebetween is small. The distance is expressed by, for example, the number of pixels. Alternatively, color information, for example, may be used as the distance. If the distance is not more than a threshold value, the merging unit 1001 proceeds to step S1103, whereas if it is more than the threshold value, the merging unit 1001 returns to step S1101 to thereby search for the next line segment j.

The line-segment merging unit 1001 merges the area of line segment j in the spatio-temporal image with the area of line segment i in the same (step S1103). These areas are three-dimensional ones expressed by x-, y- and t-coordinates. After that, the merging unit 1001 returns to step S1101 to thereby search for the next line segment j. If there is no next line segment j, the merging unit 1001 proceeds to step S1105.

If the line-segment merging unit 1001 finishes, at step S1105, processing of all line segments i (i = 1, ..., N) included in a certain slice image, it proceeds to step S1106. If it does not finish processing of all line segments, it updates i (step S1104), and returns to step S1101 to thereby iterate the process. The steps up to this are executed by the merging unit 1001 in order to merge, into a line segment, the line segments existing with a preset density in a spatio-temporal image.

Subsequently, the domain-length determination unit 1002 erases a certain merged line segment if the time-directional domain length of the merged line segment is smaller than a preset value (threshold value) (step S1106). As the domain length, the value obtained by subtracting the minimum value of the merged line segment in the time-axis direction from the maximum value thereof is used, for example.

Subsequently, the scene determination unit 1003 determines a scene based on the merged line segment (step S1107). For instance, it determines the interval between the start time and end time of the domain. The scene may be set not from the start time and end time of the domain themselves, but from times before or after the start time and end time. There is a case where a chapter point is set instead of a scene. In this case, a chapter point indicating the start of a scene is set at the start time of the domain. Instead of the start time itself, a time near the start time may be set as the chapter point. For instance, a time earlier than the start time by a preset period may be set as the chapter point, or the closest cut point (the point at which the video data is temporarily cut for, for example, editing) may be set as the chapter point.

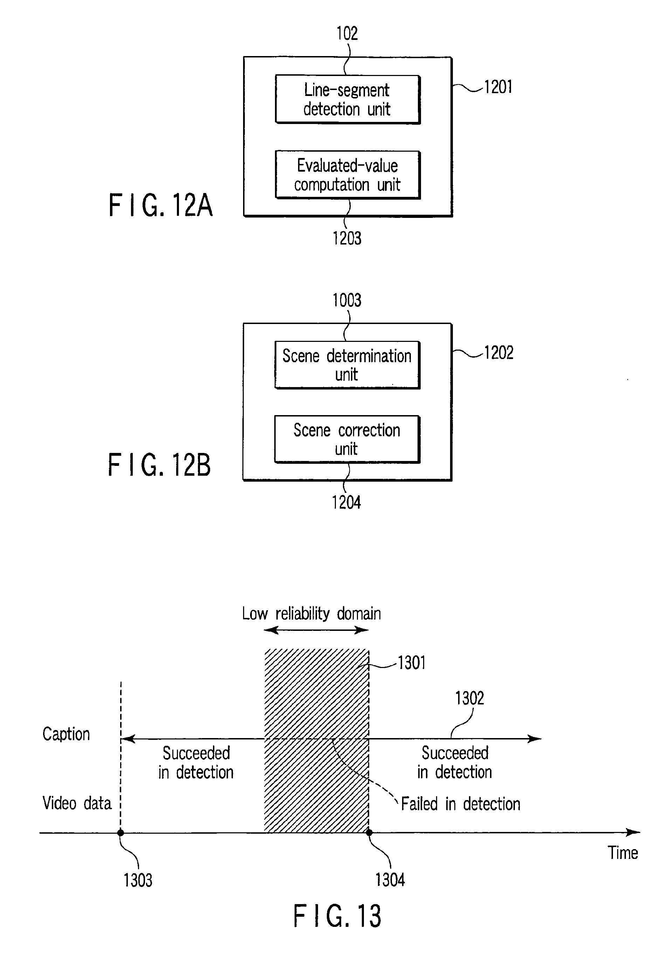

The reliability of the result of a determination as to whether a line segment exists may differ between domains. The blocks that are used instead of the line-segment detection unit 102 and scene determination unit 1003 when the reliability is considered will now be described, referring to FIGS. 12A and 12B.

The block denoted by reference number 1201 in FIG. 12A is used instead of the line-segment detection unit 102 of FIG. 1. The block 1201 includes a line-segment detection unit 102 and evaluated-value computation unit 1203. The evaluated-value computation unit 1203 computes the evaluated value of each domain. Specifically, the computation unit 1203 computes the evaluated value of each pixel. For instance, the computation unit 1203 computes the evaluated value of each pixel included in a slice image in a spatio-temporal image stored in the spatio-temporal image accumulation unit 101. The evaluated value indicates the reliability of the result of a determination as to whether a line segment exists. The lower the evaluated value, the lower the reliability of the determination result. The evaluated value may vary in accordance with, for example, the condition of the background in a spatio-temporal image. The factor for reducing the reliability is, for example, the color or brightness of the background is similar to that of the caption.

The block denoted by reference number 1202 in FIG. 12B is used instead of the scene determination unit 1003 shown in FIG. 10. The block 1202 includes a scene determination unit 1003 and scene correction unit 1204. If start and end points corresponding to a low-reliability domain having an evaluated value lower than a certain threshold value are included in the computation results of the evaluated-value computation unit 1203, the scene correction unit 1204 removes the start and end points therefrom.

Referring to FIG. 13, a description will be given of the process performed when a low-reliability domain exists.

Assume here that the evaluated-value computation unit 1203 determines that a domain 1301 is a low-reliability domain, and the line-segment detection unit 102 fails in detection of a line segment 1302 in the domain, which means that the line segment 1302 is divided into two domains. When as in this case, a low-reliability domain exists in the middle portion of a line segment, the scene correction unit 1204 sets a chapter point only at the start point 1303 of the line segment in a high-reliability domain, and does not set it at point 1304. This prevents an excessive number of scenes from being produced by division. The blocks 1201 and 1202 can merge line segment information existing in the same domain, and determine a cut point from the merged line segment.

When the scene determination unit 1003 determines a scene, it may not set a start or end point at a position in or near a low-reliability domain.

Referring to FIG. 14, a description will be given of a method for causing the spatio-temporal image accumulation unit 101 to perform temporal and spatial sampling of video frames (instead of fetching all video frames) to thin out data to be stored therein. In the operation of FIG. 2, video frames 100 are directly input to the spatio-temporal image accumulation unit 101 and form a spatio-temporal image. In this case, the spatio-temporal image accumulation unit 101 requires a large memory capacity.

Firstly, a method for temporally sampling video frames using the spatio-temporal image accumulation unit 101 will be described. To perform temporal sampling most easily, it is sufficient if video frames are fetched from the video data at regular intervals, which is effective regardless of the form of the video data.

Referring to FIG. 14, a description will be given of a specific example of a method for temporally sampling, at high speed, compressed, encoded MPEG-1 or MPEG-2 video data.

In MPEG-1 or MPEG-2, video data is formed of I-picture data items 1401 and 1403 encoded in units of frames, and a plurality of P-picture data items and B-picture data items 1402 acquired by encoding different information contained in the other frames. The I-picture data item is inserted at regular intervals, and the P-picture and B-picture data items are arranged between each pair of adjacent ones of the I-picture data items. The spatio-temporal image accumulation unit 101 performs temporal sampling of video frame data by extracting only the I-picture data items and using them as input video frame data. Accordingly, it is sufficient if only the I-picture data items 1401 and 1403 are decoded, resulting in high-speed processing of the video data.

Referring to FIG. 15, another method for temporally sampling video data using the spatio-temporal image accumulation unit 101 will be described.

In this method, cut points 1501 and 1502, such as editing points, at which video data is discontinuous, are beforehand detected in the video data. The spatio-temporal image accumulation unit 101 acquires, as input video frame data, only data of several seconds before and after the cut points 1501 and 1502. Since it is strongly possible that captions will appear or disappear before and after such cut points, they can be efficiently detected by the process performed in limited ranges.

A method for spatially sampling video data using the spatio-temporal image accumulation unit 101 will be described. To perform spatial sampling most easily, it is sufficient if video frames are subjected to down sampling in the longitudinal and lateral directions at regular intervals, thereby preparing a thumbnail.

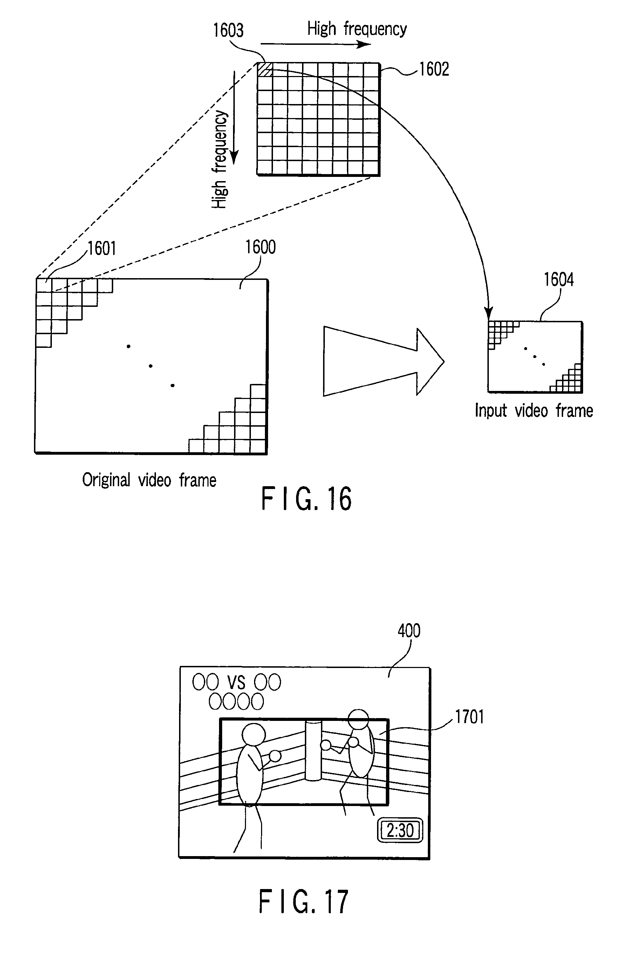

Referring to FIG. 16, a description will be given of a specific example of a method for spatially sampling, at high speed, compressed, encoded MPEG-1 or MPEG-2 video data, using the spatio-temporal image accumulation unit 101.

In FIG. 16, reference number 1600 denotes a compressed MPEG-1 or MPEG-2 video frame. The video frame 1600 is divided into a plurality of small blocks 1601, and its color information is converted into frequency information in units of blocks, using DCT. When DCT coefficients are arranged so that the frequency is increased from the upper left to the lower right as indicated by reference number 1602, coefficient 1603 at the upper left corner indicates a direct-current (DC) component. The DC component can be regarded as the average of the color levels of each block 1601. Using such DC components, contracted image data indicated by reference number 1604, in which one pixel corresponds to one block of the video frame 1600, can be produced. Since in this method, it is sufficient if only the DC components are decoded and no reverse DCT is necessary, high-speed processing can be realized.

Referring to FIG. 17, another method for perform spatial sampling using the spatio-temporal image accumulation unit 101 will be described.

In this case, only the peripheral portion of the video frame 400 except for the central portion 1701 is input. Since a caption used for setting a domain start point, domain end point or chapter point is displayed for a long time, it is, in most cases, displayed on the peripheral portion of the screen so as not to interfere with the main content of video data. Accordingly, if only the peripheral portion except for the central portion 1701 is processed, efficient processing can be realized.

The above-described temporal and spatial sampling methods may be used individually or in combination. By inputting video frames acquired by temporal/spatial sampling, the spatio-temporal image accumulation unit 101 needs only a small memory capacity, and hence high-speed processing can be realized.

### (Modification)

FIG. 4B shows a case where the relationship between scenes is not considered. However, actual video data often has a tree structure in which roughly divided scenes can be divided into further smaller portions, or can be classified into groups in accordance of the meanings of the scenes.

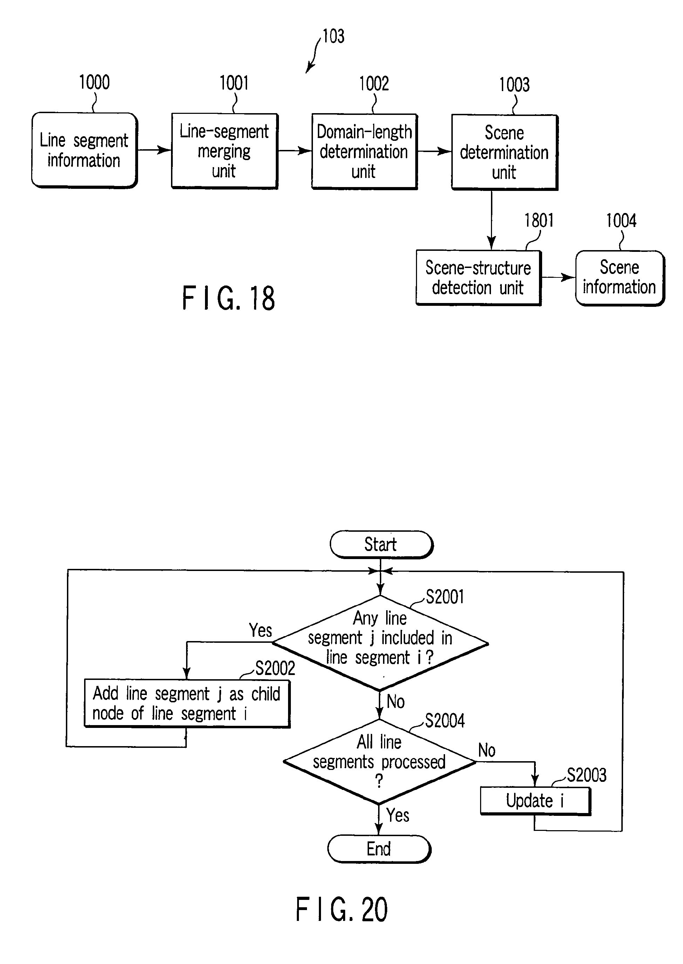

Referring to FIG. 18, a description will be given of the moving image division apparatus according to a modification of FIG. 1, in which a new element is added to the scene division unit 103 of FIG. 10. As shown, the scene division unit 103 further comprises a scene structure detection unit 1801. The scene structure detection unit 1801 receives information indicating the scene determined by the scene determination unit 1003, and detects the hierarchical structure or group organization, etc. of the scene based on the information.

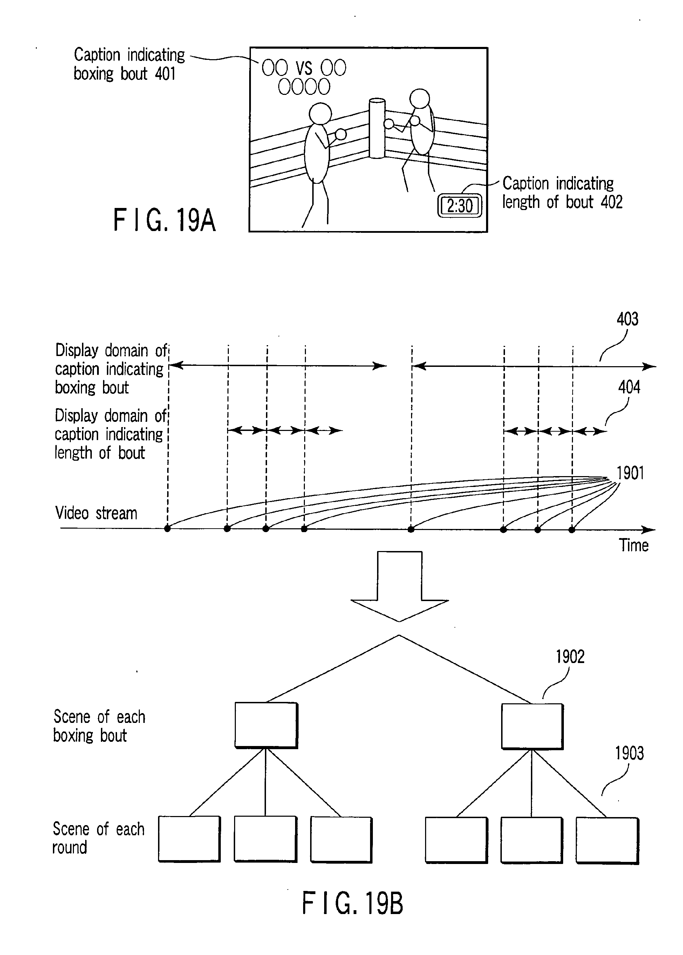

Referring to FIGS. 19A and 19B, the detection of a hierarchical tree structure will be described using the scene division example shown in FIGS. 4A and 4B.

Reference number 1901 denotes chapter points acquired by scene division. The scene structure detection unit 1801 reconstructs scenes 1902 of each boxing bout, and scenes 1903 of each round of each boxing bout as child nodes, thereby providing a hierarchical scene structure.

The scene structure detection unit 1801 determines the hierarchical relationship between the senses based on the inclusion relationship of the display domains of captions. Namely, if the caption display domain 404 indicating the time of each round of each boxing bout and used to determine a scene of each round is included in the caption display domain 403 indicating each boxing bout and used to determine a scene of each boxing bout, it is determined to be a child node.

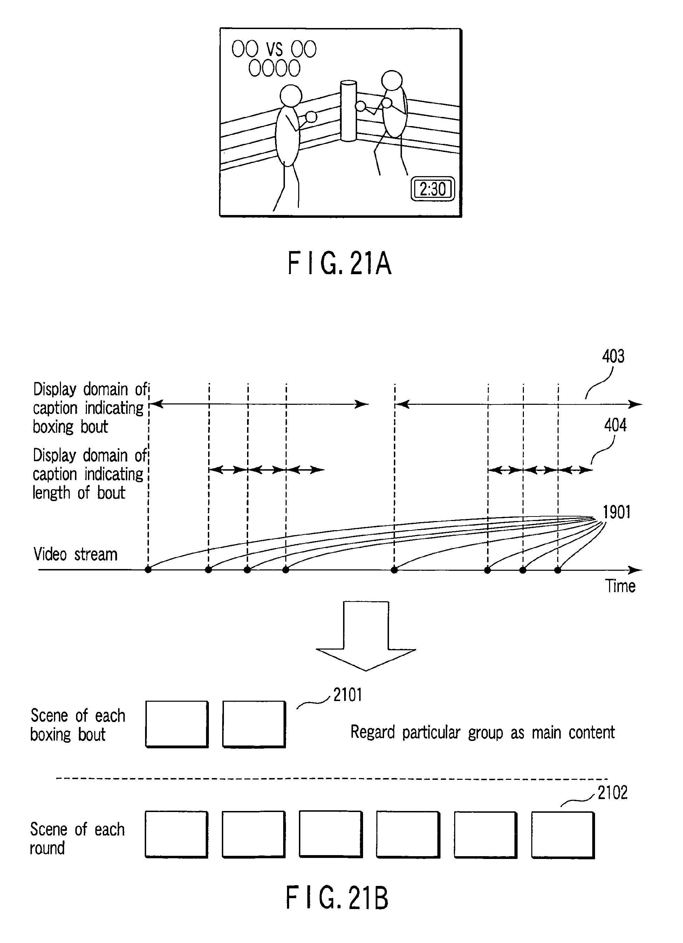

Referring to FIG. 20, the operation of the scene structure detection unit 1801 will be described. FIG. 20 is a flowchart illustrating the operation of detecting a hierarchical scene based on the inclusion relationship. Since each display domain corresponds to a line segment, the inclusion relationship between line segments is utilized.

Firstly, line segment j included in the domain ranging from the start point to the end point of line segment i in the time-axis direction is searched for (step S2001). Assume here that the total number of the line segments is N, and i, j = 1, ..., N. If there is line segment j included in the domain, the program proceeds to step S2002, whereas if there is no such line segment j, the program proceeds to step S2004.

At step S2002, line segment j is added as a child node of line segment i. Subsequently, the program returns to step S2001, where the next line segment j is searched for. If there is no next line segment j, the program proceeds to step S2004.

At step S2004, if all line segments i (i = 1, ..., N) have been processed, the process is finished, whereas if not all line segments have been processed, i is updated (step S2003), thereby returning step S2001 and iterating the process.

As described above, the scene structure detection unit 1801 constructs a hierarchical tree structure from the line-segment inclusion relationship, thereby enabling the display of a rough scene and detailed scene to be switched.

Referring FIGS. 21A and 21B, a description will be given of scene grouping, using the scene division example of FIGS. 4A and 4B.

Reference number 1901 denotes chapter points acquired by scene division. The scene structure detection unit 1801 groups them into scenes 2101 of each boxing bout, and scenes 2102 of each round of each boxing bout. The scene structure detection unit 1801 performs the grouping, utilizing clustering based on the degree of similarity in a feature amount such as the position or color of the caption.

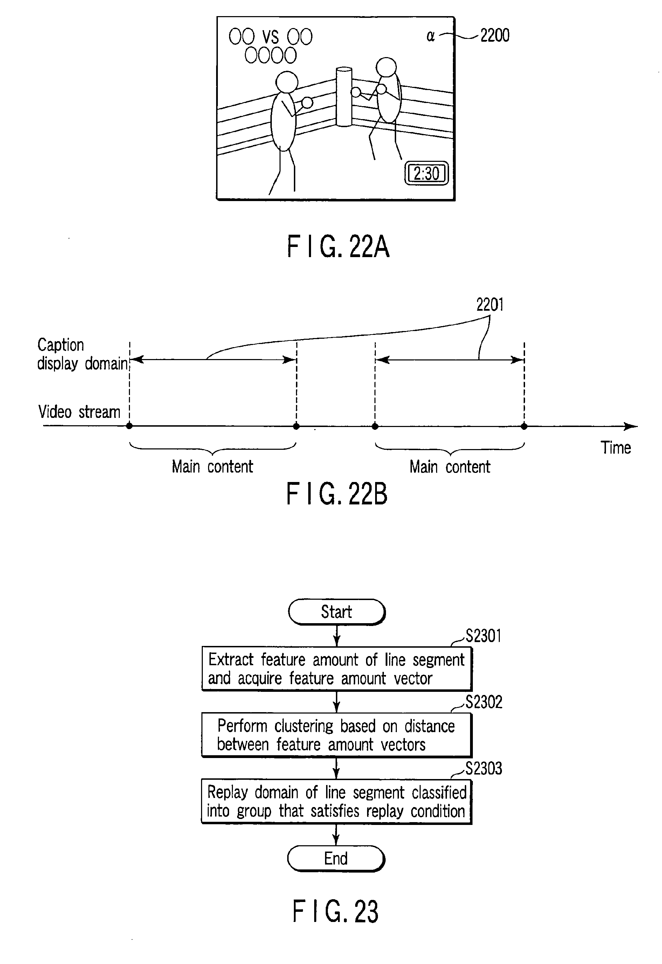

Referring to FIGS. 22A and 22B, a description will be given of an example in which video data is grouped into main content and the other content based on the grouping results.

The video data contains a plurality of captions, which are grouped into different groups by the grouping process. A caption 2200, for example, which is included in the captions, is set as a particular caption, and each display domain 2201 of this caption is set as the main content. The caption 2200 is, for example, the name of a broadcast station.

Referring to FIG. 23, a description will be given of the process by the scene structure detection unit 1801 of grouping scenes into groups and replaying a particular one of the groups as the main content.

Firstly, a feature amount is extracted from a line segment to acquire the feature amount vector of the line segment (step S2301). The feature amount is, for example, the display position on the screen, size or color information.

Subsequently, clustering of line segments is performed based on the distance in feature amount vector between each pair of line segments (step S2302). The clusters acquired at step S2302 are used as groups. For instance, the scene structure detection unit 1801 determines that line segments, in which the similarity levels of their feature amounts are higher than a threshold value, belong to a single group. The feature amount includes the display position on an image frame, the size and/or color information.

Thereafter, the scene structure detection unit 1801 determines whether each group satisfies a replay condition, determines that a certain group is main content if it satisfies the replay condition, and sets to replay the line segments included in the certain group (step S2303). The replay condition is formed of, for example, at least a feature amount similar to that of a line segment, or the shape, position or size of a caption. If, for example, a logo mark (such as the caption 2200) dedicated for each broadcast station is displayed only when main content is displayed, it may be used as the replay condition so that only the domain including the logo mark is replayed.

Assuming that in FIG. 21B, the domains of the two scenes 2101 are set to t1 and t2, and the domains of the six scenes 2102 are set to t3, t4, t5, t6, t7 and t8, the expression "t1 + t2 > t3 + t4 + t5 + t6 + t7 + t8" can be used as another replay condition. If this replay condition is satisfied, domains t1 and t2 are used as main content. Namely, the maximum (longest) group acquired by grouping is used as the main content.

As described above, if video data is divided into main content and the other content, and only the main content is replayed, viewing of a short time can be realized.

Although in the flowchart of FIG. 23, the group that satisfies the replay condition is detected in the grouping results and displayed, all line segments are compared with the replay conditions, and only the domain(s) of the line segments that satisfy the condition may be regarded as main content.

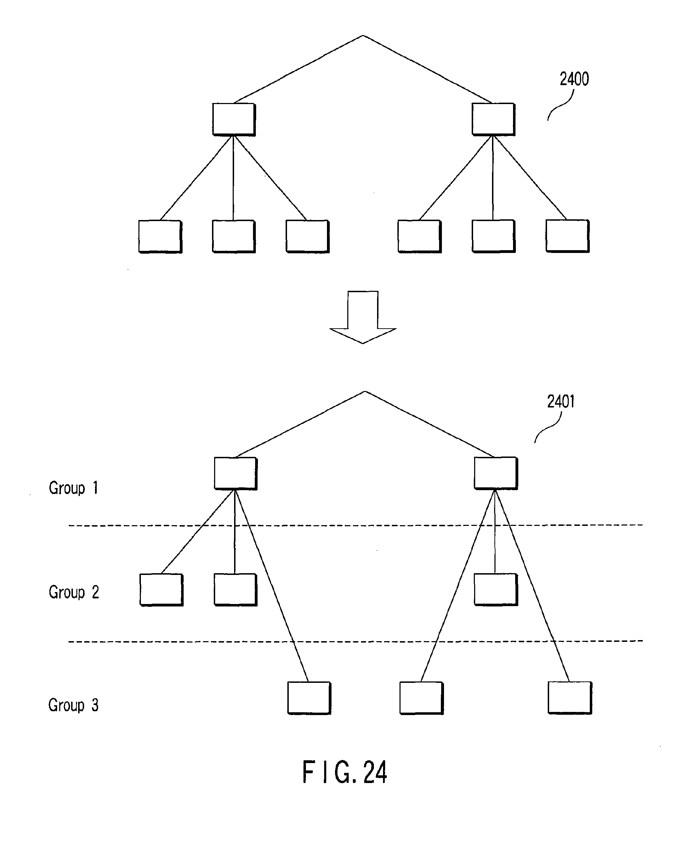

Referring to FIG. 24, a description will be given of the process of modifying the hierarchical structure based on the grouping results, using the scene structure detection unit 1801.

The construction of the hierarchical relationship of the scenes can be combined with the grouping of the scenes. For instance, assume that a hierarchical tree structure 2400 is already acquired as shown in FIG. 24. When the tree structure 2400 is based on the inclusion relationship between line segments, scenes in the same stage do not always have the same meaning. In light of this, the tree structure is reconstructed so that the scenes belonging to the same group are situated in the same stage.

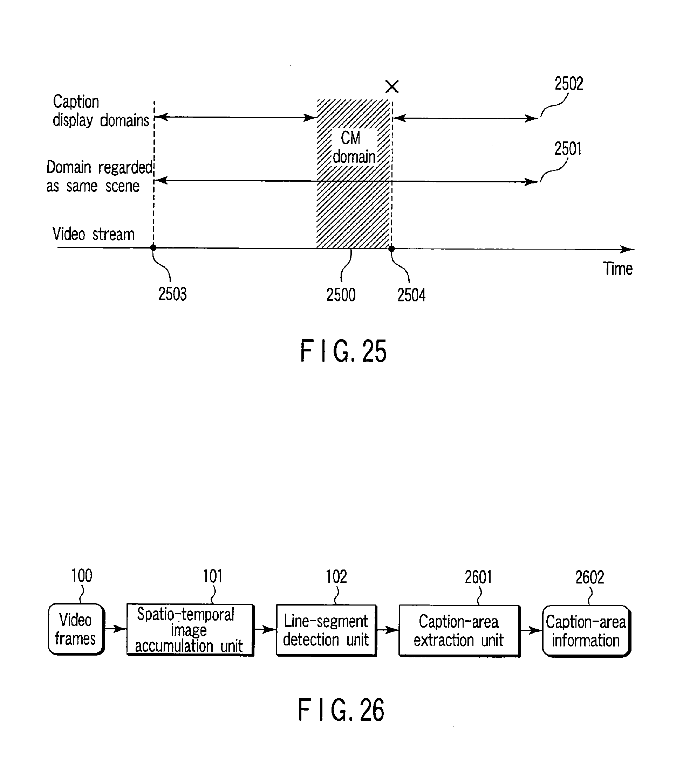

Referring to FIG. 25, the scene division process for video data containing a commercial message (CM) domain, performed by the scene structure detection unit 1801, will be described.

Assume that a domain 2501 (e.g., a certain program) regarded as the same scene and included in video data containing a CM domain 2500 is continued. In general, no caption is displayed in the CM domain, therefore the display domain detected is divided into portions as indicated by reference number 2502, and chapter points 2503 and 2504 are set. However, there is a case where it is desirable to set only one chapter point in a domain regarded as the same meaningful scene, such as each part of a program. In this case, the scene structure detection unit 1801 acquires CM domain information, and sets no chapter point when the domain regarded as the same scene contains a CM domain. Namely, a chapter point 2504 set immediately after the CM domain is cancelled. The CM domain information can be produced by a conventional CM detection technique.

In the above-described moving image division apparatus of the first embodiment, domains containing captions are detected as line segments in video data, and domain-defining points (e.g., chapter points) are set to accurately divide the video data into scenes.

The moving image division apparatus can also be realized by using a versatile computer as basic hardware. Namely, the spatio-temporal image accumulation unit 101, line-segment detection unit 102 and scene division unit 103 can be realized by causing a microprocessor incorporated in the computer to execute programs. In this case, the moving image division apparatus may be realized by pre-installing the programs in the computer, or by storing the programs in a memory medium, such as a CD-ROM, or distributing them via a network, and then installing them into the computer.

### (Second Embodiment)

Referring to FIG. 26, a caption extraction apparatus according to a second embodiment will be described.

The caption extraction apparatus of the second embodiment comprises a spatio-temporal image accumulation unit 101, line-segment detection unit 102 and caption area extraction unit 2601. The caption area extraction unit 2601 extracts a caption based on a line segment detected by the line-segment detection unit 102, and outputs caption area information 2602.

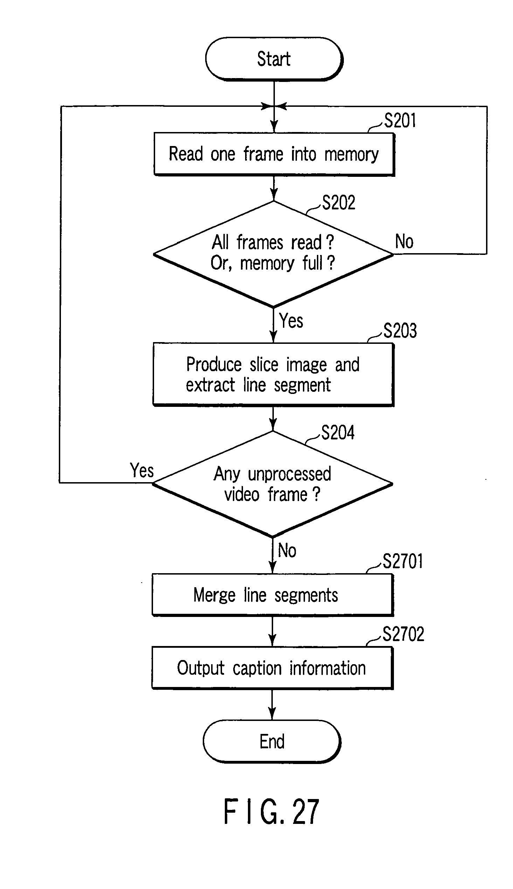

Referring to FIG. 27, the operation of the caption extraction apparatus of FIG. 26 will be described. FIG. 27 is a flowchart illustrating an operation example of the caption extraction apparatus of the second embodiment. The caption extraction apparatus of the second embodiment is acquired by modifying the scene division unit of the moving image division apparatus of the first embodiment into a caption area extraction unit. The caption extraction apparatus is similar to the moving image division apparatus except for the caption area extraction unit. Therefore, elements of the former similar to those of the latter are denoted by corresponding reference numbers, and no description is given thereof.

The caption area extraction unit 2601 merges the detected line segments into one line segment (step S2701). The merged line segment is a three-dimensional one expressed by x-, y- and t-coordinates. In the spatio-temporal image, the portion containing a caption includes a plurality of line segments arranged with a high density, and the line segments are merged based on their overlapping domains or spatial distances therebetween.

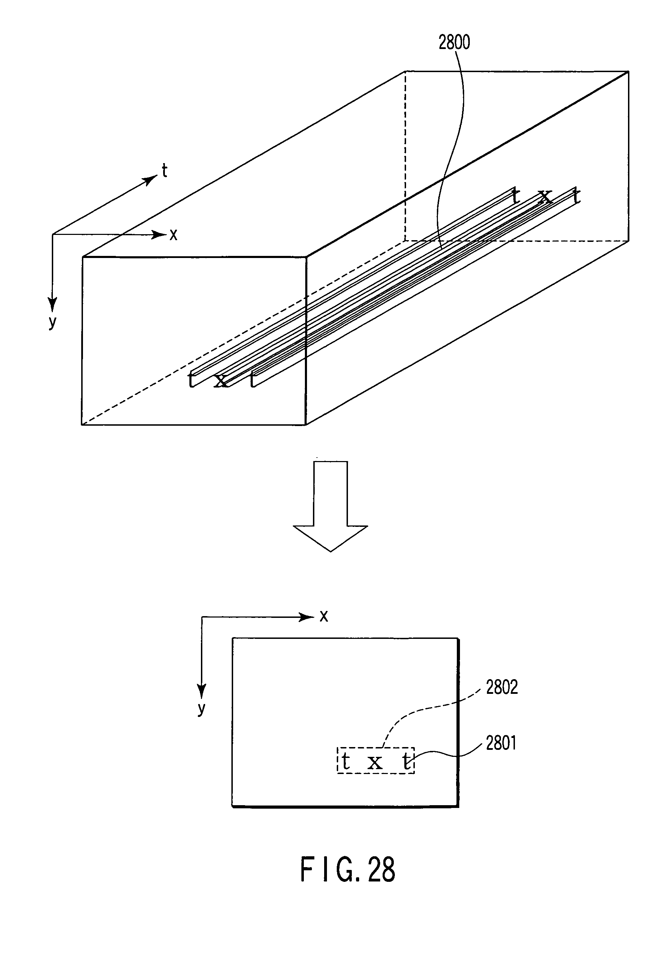

At the next step S2702, the caption area extraction unit 2601 outputs caption information including the area of a caption, based on the line segment merged at step S2701. The caption information indicates a two-dimensional area in which a caption exists, which will now be described with reference to FIG. 28.

Referring to FIG. 28, a description will be given of the method employed at step S2702 of FIG. 27 for acquiring a caption area from the merged line segment.

The merged line segment 2800 shown in FIG. 28 and merged at step S2701 is a three-dimensional area expressed by x-, y- and t-coordinates. The caption area extraction unit 2601 projects this area onto the x-y plane to acquire a two-dimensional caption area 2801 in the x-y plane, and outputs caption information indicating the coordinates of the area 2801. Further, the caption area extraction unit 2601 acquires a rectangular area 2802 surrounding the projected caption area, and outputs the coordinates of this area as caption information.

If the temporal directional length of the merged line segment 2800 in a certain x-y plane is less than a preset value, or less than a preset ratio of the entire merged area, the caption area extraction unit 2601 may not project it from the x-y-t coordinates to the x-y coordinates, i.e., ignore it.

The above-described caption extraction apparatus according to the second embodiment detects a domain, in which a caption appears, as a line segment in video data, and extracts the area of the caption based on the line segment in the spatio-temporal image.

## Claims

1. A moving image division apparatus **characterized by** comprising:
means (101) for storing a 3-dimensional spatio-temporal image containing a plurality of video frames arranged in time order;
means (102, 1201) for extracting a plurality of line segments parallel to a time axis in a slice image, the slice image being acquired by cutting the spatio-temporal image along a plane parallel to the time axis; and
means (103) for dividing the spatio-temporal image into a plurality of scenes based on a temporal domains of the line segments.

2. The apparatus according to claim 1, **characterized in that** the extracting means (102) extracts the each line segment when a length of the temporal domain is equal to or more than a threshold value.

3. The apparatus according to claim 1,
**characterized in that**:
the extracting means (102) includes means (102) for merging two line segments of the line segments into a single line segment when an interval of the two line segments is not more than a threshold value; and
the dividing means (103) divides the spatio-temporal image into the scenes after the merging unit merges the two line segments.

4. The apparatus according to claim 1,
**characterized in that**:
the extracting means (1201) includes means (1203) for computing, in units of pixels contained in the slice image, an evaluated value indicating reliability of a result of determination as to whether the at least one line segment is included in the slice image; and
the dividing means (103) divides the spatio-temporal image when the temporal domain of the each line segment has the evaluated value equal to or higher than a threshold value.

5. The apparatus according to claim 1, **characterized in that** the storing means (101) stores part of the spatio-temporal image acquired by temporally thinning out the video frames.

6. The apparatus according to claim 1, **characterized in that** the storing means (101) stores the video frames contracted in size, or stores only part of each of the video frames.

7. The apparatus according to claim 1, **characterized in that** the dividing means (103) includes means (1001) for determining that a first line segment which is included in a display domain ranging from a temporal directional start point of a second line segment to a temporal directional end point of the second line segment, belongs to a hierarchical stage lower than a hierarchical stage of the second line segment, at the time that the extracting means extracts the first line segment and the second line segment from the line segments.

8. The apparatus according to claim 1, **characterized in that** the dividing means (103) includes means (1001) for determining that at least two of the line segments belong to one of a plurality of groups at the time that the extracting means (102) extracts the at least two line segments and degree of similarly in a feature amount between the at least two line segments is not less than a threshold value, the feature amount including at least one of a position of each of the at least two line segments, size of each of the at least two line segments, and color information concerning the at least two line segments.

9. The apparatus according to claim 8, **characterized in that** the dividing means (103) divides the spatio-temporal image into main content and other content, the main content corresponding to one of the groups which has a maximum temporal domain.

10. The apparatus according to claim 1, **characterized in that** the dividing means (103) divides the spatio-temporal image into main content and other content, the main content corresponding to the temporal domain of the at least one line segment when the at least one line segment contains one of a particular character and a particular image.

11. A caption extraction apparatus **characterized by** comprising:
means (101) for storing a 3-dimensional spatio-temporal image containing a plurality of video frames arranged in time order;
means (2601) for extracting a plurality of line segments parallel to a time axis in a slice image, the slice image being acquired by cutting the spatio-temporal image along a plane parallel to the time axis; and
means (2601) for merging the line segments into a single line segment serving as a caption area at the time that each space-time distance between the line segments is not more than a threshold value.

12. A moving image division method **characterized by** comprising:
storing a 3-dimensional spatio-temporal image containing a plurality of video frames arranged in time order;
extracting a plurality of line segments parallel to a time axis in a slice image, the slice image being acquired by cutting the spatio-temporal image along a plane parallel to the time axis; and
dividing the spatio-temporal image into a plurality of scenes based on a temporal domain of the line segment.

13. A caption extraction method **characterized by** comprising:
storing a 3-dimensional spatio-temporal image containing a plurality of video frames arranged in time order;
extracting a plurality of line segments parallel to a time axis in a slice image, the slice image being acquired by cutting the spatio-temporal image along a plane parallel to the time axis; and
merging the line segments into a single line segment serving as a caption area at the time that each space-time distance between the line segments is not more than a threshold value.

14. A moving image division program stored in a computer readable medium, **characterized by** comprising:
means for instructing a computer to access to means (101) for storing a 3-dimensional spatio-temporal image containing a plurality of video frames arranged in time order;
means (102, 1201) for instructing the computer to extract a plurality of line segments parallel to a time axis in a slice image, the slice image being acquired by cutting the spatio-temporal image along a plane parallel to the time axis; and
means (103) for instructing the computer to divide the spatio-temporal image into a plurality of scenes based on a temporal domain of the line segment.

15. A caption extraction program stored in a computer readable medium, **characterized by** comprising:
means for instructing a computer to access to means (101) for storing a 3-dimensional spatio-temporal image containing a plurality of video frames arranged in time order;
means (2601) for instructing the computer to extract a plurality of line segments parallel to a time axis in a slice image, the slice image being acquired by cutting the spatio-temporal image along a plane parallel to the time axis; and
means (2601) for instructing the computer to merge the line segments into a single line segment serving as a caption area at the time that each space-time distance between the line segments is not more than a threshold value.
